# EUROPEAN PATENT APPLICATION

(11) **EP 4 324 582 A1**
(43) Date of publication of application: **21.02.2024**
(21) Application number: 22928817.0
(22) Date of filing: 26.08.2022
(51) Int. Cl.: B23C 3/12, B23D 79/00, B23Q 11/00, B24B 41/04

(54) **MACHINING TOOL**

(30) Priority: 22.02.2022 JP 2022025640
(71) Applicant: Kato Mfg. Co., Ltd., Hiratsuka-shi, Kanagawa, 254-0076 (JP)
(72) Inventor: Nguyen Dinh Dinh, Hiratsuka-shi, Kanagawa 254-0076 (JP)
(74) Representative: Geskes, Christoph
(86) International application number: PCT/JP2022/032149
(87) International publication number: WO 2023/162296

(57) **Abstract**

A machining tool is provided including an upper shaft (1) attached to a host device, through which torque is transmitted; a tilt device (3) connected to a tip of the upper shaft (1) including a fixed yoke (3a) and a tilt yoke (3b), the tilt device (3) further including a pin (3dx) around which the tilt yoke (3b) revolves in one direction and a pin (3dy) around which the tilt yoke (3b) revolves in a direction orthogonal to said one direction; a main drive shaft (4) provided with a tilt plate (7) at its upper end; a holder (5) inserted into a tip of the main drive shaft (4), to which a cutting tool (6) is attached; and a tilt support mechanism (15) contacting the underside of the tilt plate (7) to support the inclined tilt plate (7) with a steel ball (12).

## Description

### Technical Field

The present invention relates to a machining tool, and in particular, relates to a machining tool that enables a holder of a deburring tool to perform smooth, accurate, and highly precise operations responding to load variations of small to heavy loads to which the holder is subject, that can fix the tilt direction of a drive shaft of the machining tool, that increases the centering performance of the drive shaft, and that significantly improves wear resistance of a tilt support mechanism of the machining tool.

### Background Art

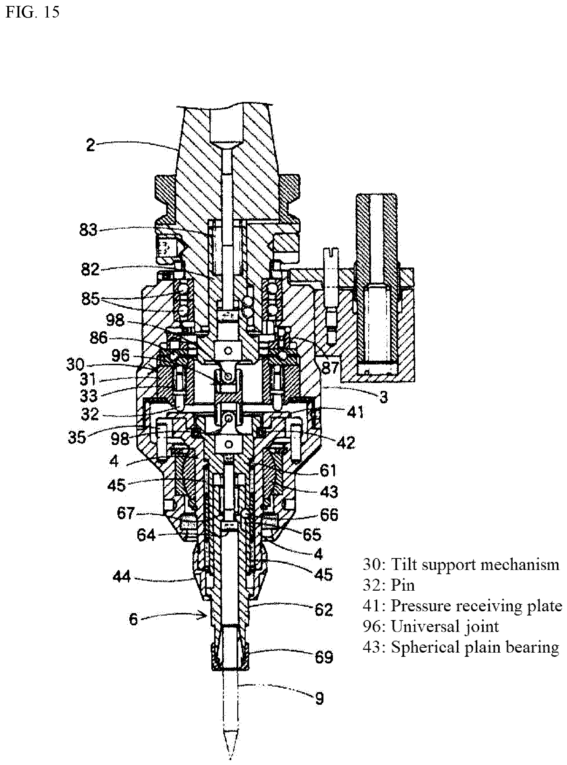

The applicant of the present invention proposed a machining tool used for deburring in Patent Document 1 (Japan Unexamined Patent Application Publication No. 2005-349549). In Patent Document 1, Example 3 of a machining tool disclosed therein includes a universal joint 96, which is included in the present application as FIG. 15. Referring to FIG. 15, a pin-type tilt support mechanism 30 is provided at the tip part of the universal joint 96. The tilt support mechanism 30 includes a pin case 31 in which twelve pins 32 are circularly arranged. Each of the pins 32 is configured to be movable by a spring 33 provided inside a hole. The pin 32 contacts a pressure receiving plate 41 at its tip and presses down on the plate 41. The pressure receiving plate 41 is tilted in accordance with a holder 6 being tilted. If the pressure receiving plate 41 is tilted, the pin 32 on one side protrudes and the pin 32 on the other side retreats, which enables the plate 41 to press down on the upper part of the tilted holder 6. The tilt support mechanism 30 is provided with a pin case 31, which is located deep within the machining tool. This makes it cumbersome to replace the components of the pin case 31, inhibits the diameter of the pin 32 and the spring 33 from being made lager, and limits the number of the pin 32 to be provided.

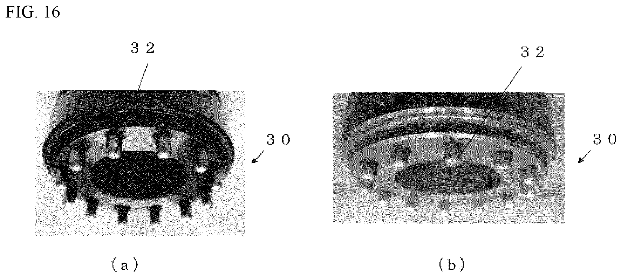

The pin 32, whose tip is formed spherically, presses down on the pressure receiving plate 41. If the holder 6 is tilted, the pressure receiving plate 41 is tilted, and thus the pin 32 rubs on the pressure receiving plate 41. Also, because there is a time difference between the beginning when the holder 6 is tilted and the beginning when the pressure receiving plate 41 is rotated, the pin 32 rubs on the pressure receiving plate 41. As a result, the pin 32 wears out. Referring to FIG. 16(a), each tip of the pins 32 is spherical when newly made, and referring to FIG. 16(b), each tip of the pins 32 is worn away and scraped into a flat shape. The pressure receiving plate 41 is rubbed by the pins 32, whereby recesses are created on the plate 41. If each tip of the pins 32 is flattened, the tip is caught in the recesses on the plate 41 when the pins press on the plate 41. This prevents the machining tool from operating smoothly. In addition, the wear of the pins increases the frequency of parts replacement to require much labor for the parts replacement. In addition, the tilt support mechanism 30 in FIG. 15 has shown poor performance of returnability (i.e., centering performance) after the machining tool is tilted because even after the pressure receiving plate is tilted, the pin on the side to which the load is applied and the opposite pin to which the load is not applied both press on the pressure receiving plate.

### Prior-art Document

### Patent Document

Patent Document 1: Japanese Unexamined Patent Application Publication No. 2005-349549

### Summary of the Invention

### Technical Problem

The present invention was made to address the aforementioned problems, and the object of the present invention is to provide a machining tool that enables the machining tool to perform smooth, accurate, and highly precise operations responding to load variations of small to heavy loads to which the holder is subject, that can fix the tilt direction of a drive shaft of the machining tool, that increases the centering performance of the drive shaft, and that significantly improves wear resistance of a tilt support mechanism of the machining tool.

### Solution to Problem

A machining tool according to an embodiment of the present invention includes an upper shaft 1, a tilt device 3, a main drive shaft 4, and a tilt support mechanism 15. The upper shaft 1 is attached to a host device, and torque is transmitted through the shaft 1. The tilt device 3 connected to a tip side of the upper shaft 1 includes a fixed yoke 3a, a tilt yoke 3b, a pin 3dx around which the tilt yoke 3b revolves in one direction, and a pin 3dy around which the tilt yoke 3b revolves in a direction orthogonal to said one direction. The main drive shaft 4 includes a tilt plate 7 at the upper end of the shaft 4, wherein the tilt plate 7 is connected to the tilt yoke 3b. The holder 5 is to be inserted into the tip side of the main drive shaft 4, and a cutting tool 6 is attached to the holder 5. The tilt support mechanism 15 contacts the underside of the tilt plate 7 to support with a steel ball 12 the tilt plate 7 being inclined.

The tilt device 3 includes a set screw 21'. If the set screw 21' is put in an operating state (on-state), the tilt yoke 3b is restricted to revolving in one direction, and if the set screw 21' is put in a non-operating state (off-state), the tilt yoke 3b can be tilted in all circumferential directions.

The tilt support mechanism 15 is housed inside a lower cover 14b. The tilt support mechanism 15 includes a support plate 9, a plurality of holes 13 provided to the support plate 9, the steel balls 12, round plates 11, springs 10, and steps 13a. The steel ball 12, the round plate 11, and the spring 10 are inserted into each of the holes 13, and the step 13a is provided to each of the holes 13. An initial load is put on the spring 10, and the round plate 11 does not rise above the step 13a.

The tilt support mechanism 15 is replaced as a set, wherein the set includes the support plate 9, the steel balls 12, the round plates 11, the springs 10, and the lower cover 14b.

The lower cover 14b includes a base 14ba and a cap 14bb, and by removing the cap 14bb, the spring only can be replaced.

The tilt support mechanism 15 includes an adjustment dish 22 that contacts the underside of each of the springs 10, and a pin 23 that is fixed to the adjustment dish 22 at one end thereof, and the other end of the pin 23 protrudes from a long vertical hole of the cap 14bb to the outside of the cap 14bb. The adjustment dish 22 is screw-connected to the base 14ba. Rotating the cap 14bb on ball grooves 24 enables the adjustment dish 22 to be rotated via the pin 23, which causes the adjustment dish 22 to move up and down to change the length of the spring 10, by which an initial load of the spring 10 is adjusted.

The tilt support mechanism 15 includes an adjustment dish 22 that contacts the underside of each of the springs 10. The adjustment dish 22 is screw-connected to the cap 14bb. Rotating the cap 14bb on ball grooves 24 enables the adjustment dish 22 to be rotated, which causes the adjustment dish 22 to move up and down, by which an initial load of the spring 10 is adjusted.

The upper shaft 1 includes an air path 8. The air fed into the air path 8 passes through the tilt device 3 provided inside an upper cover 14a to be released outside through a gap between a lower cover 14b and the main drive shaft 4.

### Advantageous Effects of the Invention

The machining tool of the present invention described in Claim 1 provides the tilt support mechanism including multiple steel balls, which contacts the underside of the tilt plate and supports the inclined tilt plate. The steel balls significantly reduce friction with the tilt plate. The steel ball 12 is to be created with a high sphericity tolerance, which provides to the ball high rotatability and resistance to wear to achieve smooth operations of the machining tool. The tilt support mechanism is provided on the underside of the tilting plate, which allows for easy replacement of the tilt support mechanism.

According to Claim 2, if the set screw is put in an operating state (on-state), revolving of the tilt yoke is restricted in one direction, and if the set screw is put in a non-operating state (off-state), the tilt yoke can be tilted in all directions. Thus, tilting of the cutting tool both in all circumferential directions or in one direction can be controlled by a single machining tool. This feature is suited to deburring in which tilting in one direction is needed.

According to Claim 3, the tilt support mechanism can elastically support the tilt plate such that the spring presses the steel ball inserted into the hole of the support plate to protrude outward. An initial load is applied to the spring, so that the tilt plate is tilted only if a load applied to the cutting tool exceeds the initial load. Because the round plate does not rise above the step provided inside the hole, the round plate does not push the steel ball to contact the tilt plate, by which the centering performance of the main drive shaft is improved.

According to Claim 4, the tilt support mechanism is replaced as a set, wherein the set includes the support plate, the steel balls, the round plates, the springs, and the lower cover. This greatly reduces the time and effort required for replacement compared with replacing springs one by one.

According to Claim 5, the lower cover includes a base and a cap wherein the cap is configured to be removable, which makes it easy to replace only the spring. The spring can be replaced by removing the cap even in the state in which the lower cover is attached to the upper cover.

According to Claim 6, the adjustment dish to adjust the initial load of the springs is provided. This allows the cap to adjust the initial load of the springs at one time by rotating the cap. How much load is applied can be determined by the position of the pin protruding to the outside of the cap.

According to Claim 7, the adjustment dish to adjust the initial load of the springs is provided. This allows the cap to adjust the initial load of the springs at one time by rotating the cap. How much load is applied can be determined by where the mark of the cap points on the scale.

According to Claim 8, the air can be fed from a host device into the air path and can be released outside through the gap between the lower cover and the main drive shaft, i.e., an air purge is performed. This prevents fine particles from entering the inside of the machining tool. The air purge is superior to using a bellow-shaped dustproof cover because the repulsive force generated by the telescopic motion of the bellow-shaped cover according to the operations of the holder affects the performance of the holder.

### Brief Description of the Drawings

FIG. 1 is an internal structure diagram of a machining tool according to an embodiment of the present invention.
FIG. 2 is a diagram in which a main drive shaft, a holder, and a cutting tool shown in FIG. 1 are tilted.
FIG. 3 is a cross-sectional view taken along the B-B line shown in FIG. 1.
FIG. 4 is an external view of a tilt device.
FIGs 5(a) to 5(c) are example configurations of the tilt device. FIG. 5(a) shows a case in which a tilt yoke can be tilted in all circumferential directions, FIG. 5(b) shows a case in which a center block is fixed to a fixed yoke by which the tilt yoke is restricted to being tilted in one direction, and FIG. 5(c) shows a case in which a set screw can switch the operation of the machining tool between the state in which the tilt yoke can be tilted in all circumferential directions and the state in which the tilt yoke is restricted to being tilted in one direction.
FIG. 6 is an enlarged view of a part of a tilt support mechanism, to which a steel ball is provided.
FIG. 7 is a plan view of the tilt support mechanism.
FIGs. 8(a) and 8(b) are drawings illustrating the operations of the tilt support mechanism. FIG. 8(a) illustrates the state in which a tilt plate is not tilted, and FIG. 8(b) illustrates the state in which the tilt plate is tilted.
FIG. 9 is a diagram showing an airflow inside the machining tool shown in FIG. 1.
FIGs. 10(a) and 10(b) are diagrams illustrating how the machining tool operates when the cutting tool is subject to a load. FIG. 10(a) shows the state in which the main drive shaft 4, the holder 5, and the cutting tool 6 do not move, and FIG. 10(b) shows the state in which the main drive shaft 4, the holder 5, and the cutting tool 6 have moved.
FIG. 11 is a diagram illustrating how the tilt support mechanism is replaced as a set.
FIG. 12 is a diagram illustrating how only the spring of the tilt support mechanism is replaced.
FIG. 13 is a diagram illustrating a means to adjust the initial load of a spring (Example 1).
FIG. 14 is a diagram illustrating a means to adjust the initial load of a spring (Example 2).
FIG. 15 is an internal structure diagram of a conventional machining tool.
FIGs. 16(a) and 16(b) are photographs of pins of a conventional tilt support mechanism in which FIG. 16(a) shows a new pin and FIG. 16(b) shows a worn pin.

### Description of the Embodiments

### Examples

Hereinafter, a machining tool according to an embodiment of the present invention will be described in detail with reference to the accompanying drawings.

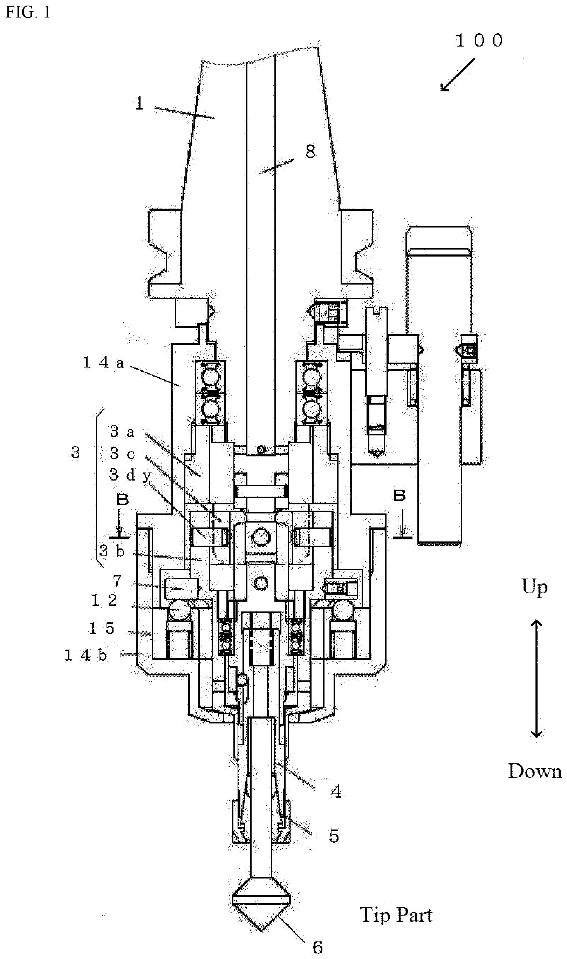

FIG. 1 is an internal structure diagram of a machining tool 100 according to an embodiment of the present invention. An upper shaft 1 is a drive shaft configured to be detachably attached to a host device such as a working machine or a robot, through which torque is transmitted. A tilt device 3 is connected to the upper shaft 1 at the tip side thereof. The tilt device 3 includes a fixed yoke 3a, a tilt yoke 3b, a center block 3c, a pin 3dx connecting the center block 3c and the fixed yoke 3a, and a pin 3dy connecting the center block 3c and the tilt yoke 3b. A main drive shaft 4 is provided with a tilt plate 7 at the top of the shaft 4, and a holder 5 is attached to the tip side of the shaft 4, wherein the tilt plate 7 is connected to the tilt yoke 3b. A cutting tool 6 is to be inserted into the holder 5. A tilt support mechanism 15 is provided to contact the underside of the tilt plate 7, wherein the tilt plate 7 is supported by steel balls 12 when the plate 7 is tilted. A cover 14, which includes an upper cover 14a and a lower cover 14b, is provided to cover the outside of the upper shaft 1, the tilt device 3, and the tilt support mechanism 15. The air fed into an air path 8 from a host device passes through the tilt device 3, and is released outside through a gap between the holder 5 and the lower cover 14b for dust-proofing, whereby fine particles are prevented from entering the inside of the tool.

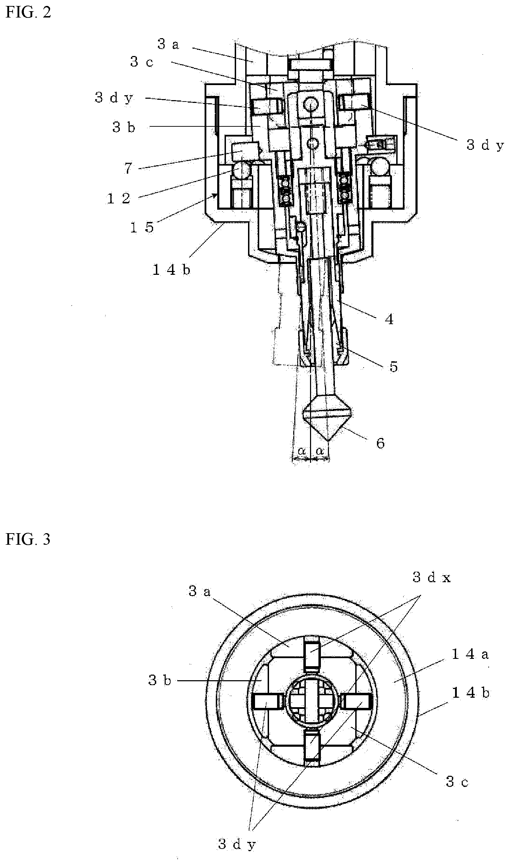

FIG. 2 is a diagram in which the main drive shaft 4, the holder 5, and the cutting tool 6 shown in FIG. 1 are tilted. If a lateral load is applied to the cutting tool 6 in a lateral direction, the main drive shaft 4, the holder 5, and the cutting tool 6 are tilted. The tilting is made around the pin 3dx of the tilt device 3 connecting the fixed yoke 3a and the center block 3c. The angle of tilt is α°. The tilting can be made 360° in any direction. If the main drive shaft 4, the holder 5, and the cutting tool 6 are tilted, the tilt plate 7, which is attached to the upper end of the main drive shaft 4, is tilted. Referring to FIG. 2, if the tip of the cutting tool 6 is tilted to the right, the steel ball 12 on the left side of the tilt support mechanism 15 is pressed to descend, while the steel ball 12 on the right side of the tilt support mechanism 15 remains without acting.

FIG. 3 is a cross-sectional view taken along the B-B line shown in FIG. 1, illustrating a cross section of the central portion of the tilt device 3. In the tilt device 3, the pin 3dx connecting the center block 3c and the fixed yoke 3a, and the pin 3dy connecting the center block 3c and the tilt yoke 3b are arranged like a cross. If the tilt yoke 3b and the center block 3c revolve around the pin 3dx, the tilt yoke 3b can be tilted in the left and right directions in FIG. 3. If the tilt yoke 3b and the center block 3c revolve around the pin 3dy, the tilt yoke 3b can be tilted in the vertical direction in FIG. 3. This combination of the revolving movement enables the tilt yoke 3b to be tilted in all circumferential directions.

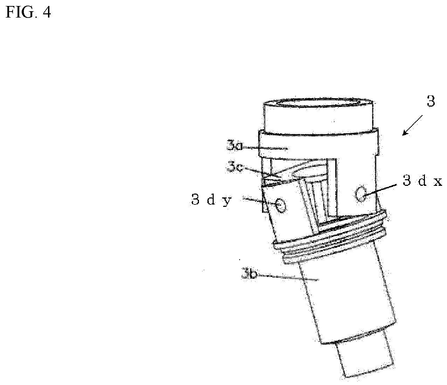

FIG. 4 is an external view of the tilt device 3. Referring to FIG. 4, the tilt device 3 includes the fixed yoke 3a, the tilt yoke 3b, the center block 3c, the pin 3dx connecting the center block 3c and the fixed yoke 3a, and the pin 3dy connecting the center block 3c and the tilt yoke 3b. Although the fixed yoke 3a is fixed to the upper shaft 1, the tilt yoke 3b can be tilted freely relative to the fixed yoke 3a. In other words, the tilt device 3 corresponds to a universal joint, albeit with minor differences. Compared with the spherical plain bearing 43 (see FIG. 15), the tilt device 3 can be made smaller and can secure space inside. Also, the tilt device 3 eliminates the problem specific to the spherical plain bearing 43 such that oil used by the bearing 43 deteriorates, and is adhered to the bearing 43.

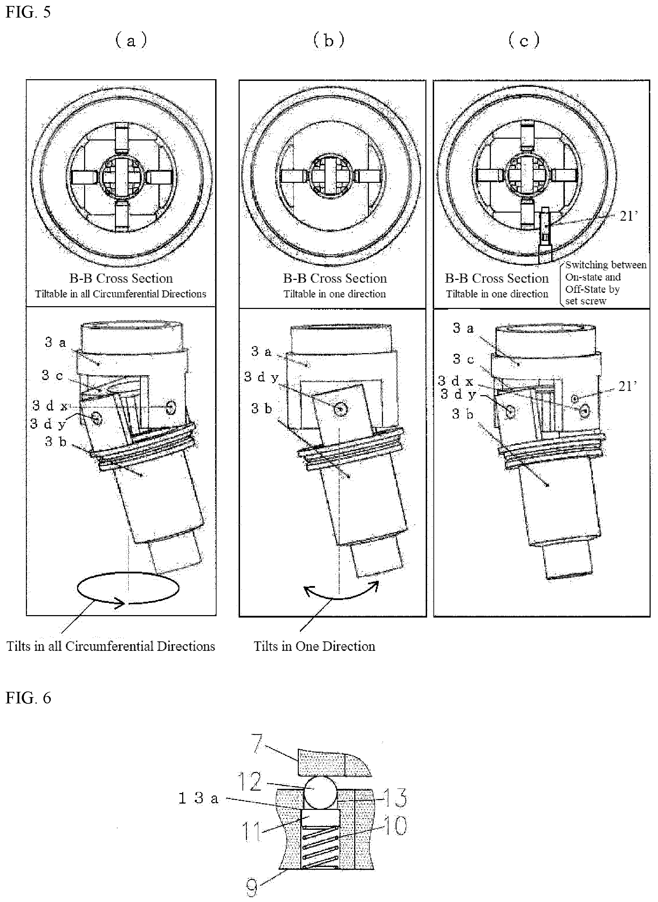

FIGs. 5(a) to 5(c) are example configurations of the tilt device 3. FIG. 5(a) shows a case in which the tilt yoke 3b can be tilted in all circumferential directions, FIG. 5(b) shows a case in which the tilt yoke 3b is restricted to being tilted in one direction, in which the center block 3c is fixed to the fixed yoke 3a, and FIG. 5(c) shows a case in which a set screw 21' can switch the operation of the machining tool 100 between the state in which the tilt yoke 3b can be tilted in all circumferential directions and the state in which the tilt yoke 3b is restricted to being tilted in one direction. Referring to FIG. 5(a), the tilt yoke 3b of the tilt device 3 is configured to be capable of being tilted in all circumferential directions. The tilt device 3 of FIG. 5(a) includes the fixed yoke 3a, the tilt yoke 3b, the center block 3c, the pin 3dx connecting the center block 3c and the fixed yoke 3a, and the pin 3dy connecting the center block 3c and the tilt yoke 3b.

Referring to FIG. 5(b), the pin 3dx connecting the center block 3c and the fixed yoke 3a is eliminated from the tilt device 3, in which the center block 3c is extended and integrated with the fixed yoke 3a. Because the tilt device shown in FIG. 5(b) is provided with the pin 3dy connecting the center block 3c and the tilt yoke 3b, the tilt yoke 3b is tilted in one direction. This configuration of the tilt device 3 is suited to deburring in which the tilt yoke 3b need not be tilted in all circumferential directions.

Referring to FIG. 5(c), the set screw 21' is provided to the tilt device 3 shown in FIG. 5(a). If the set screw 21' is put in an operating state (on-state), which blocks the center block 3c from moving, the tilt yoke 3b can be restricted to being tilted in one direction. If the set screw 21' is put in a non-operating state (off-state), which allows the center block 3c to move, the tilt yoke 3b can be tilted in all circumferential directions. The switching between the on-state and the off-state can be easily made from the outside via the set screw 21'.

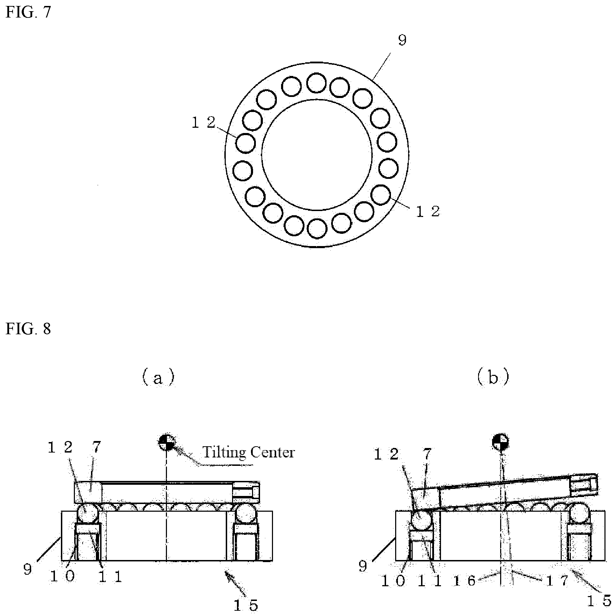

FIG. 6 is an enlarged view of a part of the tilt support mechanism 15, to which the steel ball 12 is provided, and FIG. 7 is a plan view of the tilt support mechanism 15. Referring to FIG. 6, the tilt support mechanism 15 includes a hole 13 provided to a support plate 9, a steel ball 12, a round plate 11, and a spring 10. The steel ball 12, the round plate 11, and the spring 10 are inserted into the hole 13. An initial load is put on the spring 10, which biases the steel ball 12 upward. The biased steel ball 12 protrudes partly outside the support plate 9. A step 13a is provided to the hole 13, which prevents the round plate 11 from rising above the step 13a. If the steel ball 12 is subject to a downward load, the steel ball 12 retreats into the inside of the support plate 9. Referring to FIG. 7, The number of the steel ball 12 provided to the support plate 9 is 18, which makes the load to which each ball is subject smaller and reduces wear of the steel ball 12. The steel ball 12 is to be created with a high degree of precision, for example, with a sphericity tolerance of 2 to 3 µm.

FIGs. 8(a) and 8(b) are drawings illustrating the operations of the tilt support mechanism 15. FIG. 8(a) illustrates the state in which the tilt plate 7 is not tilted, and FIG. 8(b) illustrates the state in which the tilt plate 7 is tilted. In FIGs. 8(a) and 8(b), the tilting center is the pin 3dx of the tilt device 3. The axis pointing vertically straight down from the tilting center is the central axis 16, and the axis tilting from the central axis 16 is the tilting axis 17. Referring to FIG. 8(a), if the tilt plate 7 is not tilted, the steel balls 12 protrude uniformly from the support plate 9 to press and receive the tilt plate 7. If the cutting tool 6 is subject to a load, and accordingly, the main drive shaft 4, the holder 5 and the cutting tool 6 are tilted, the tilt plate 7 attached to the main drive shaft 4 is tilted. Then, the tilt plate 7 presses downward the steel ball 12 on one side, which causes the steel ball 12 to retreat inside the support plate 9, as is shown in FIG. 8(b). In such a case, the steel ball 12 on the other side protrudes outwards from the support plate 9. However, because the upward movement of the round plate 11 is restricted by the step 13a provided to the hole 13, the spring 10 on the other side does not act on the steel ball 12 beyond the initial load. Also, in this case, a gap is created between the steel ball 12 and the tilt plate 7, so that the steel ball 12 does not press the tilt plate 7. If the steel ball 12 retreats into the hole 13 and presses the support plate 9, the steel ball 12 compresses the spring 10, by which the repulsive force of the spring 10 is generated. This force enables the tilt plate 7 to return to horizontal. If the tilt plate 7 becomes horizontal, the main drive shaft 4, the holder 5, and the cutting tool 6 are vertically aligned.

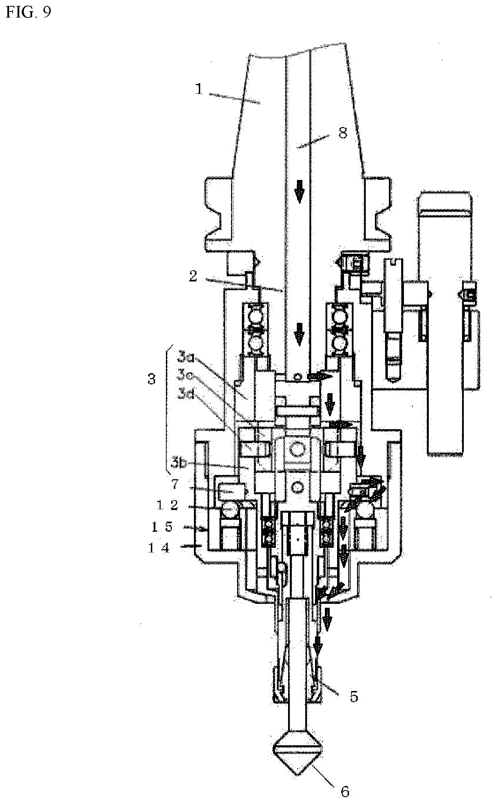

FIG. 9 is a diagram showing the airflow inside the machining tool 100. The air is fed from a host device through the air path 8 of the upper shaft 1 and is released outside through a gap between the lower cover 14b and the main drive shaft 4, i.e., an air purge is performed. This can prevent fine particles from entering the inside of the machining tool 100.

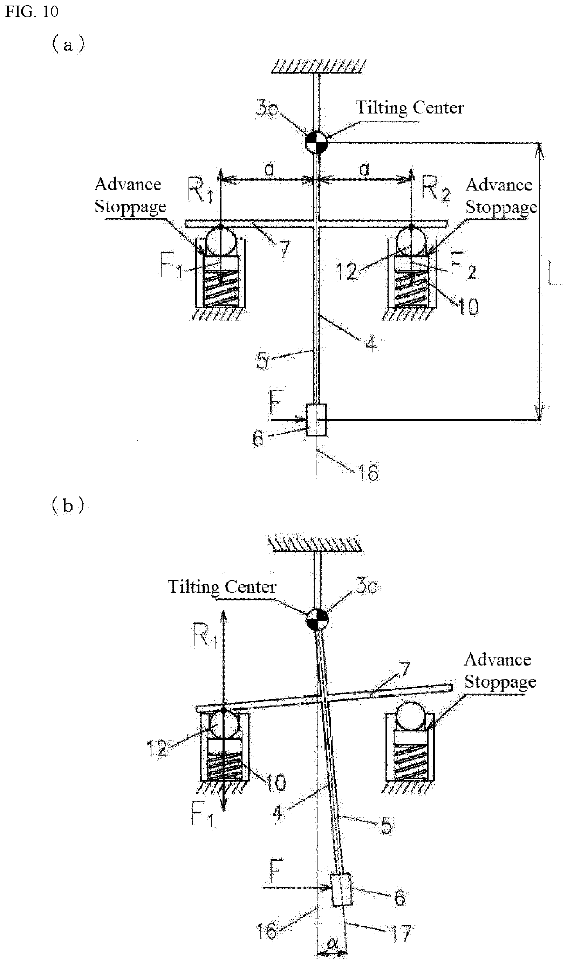

FIGs. 10(a) and 10(b) are diagrams illustrating how the machining tool 100 including the main drive shaft 4. the holder 5, and the cutting tool 6 operates when the cutting tool 6 is subject to a load. FIG. 10(a) shows the state in which the main drive shaft 4, the holder 5, and the cutting tool 6 do not move when the cutting tool 6 is subject to a load, and FIG. 10(b) shows the state in which the main drive shaft 4, the holder 5, and the cutting tool 6 have moved when the cutting tool 6 is subject to a load. Referring to FIG. 10(a), both springs 10 on the left and right sides are compressed by an initial load. Each of the springs 10 generates a biasing force F0. The step 13a provided to each of the holes 13 acts as an advance stoppage against the round plate 11. Within the hole 13, the step 13a contacts the round plate 11, the round plate 11 contacts the steel ball 12, and the steel ball 12 contacts the tilt plate 7. If the cutting tool 6 is subject to a lateral load F, unless the load F is greater than the initial tilting load f (f = F0 x a/L), the tilt plate 7 does not move. This state is shown in FIG. 10(a). If F is greater than f, the tilt plate 7 moves. This state is shown in FIG. 10(b). Because the step 13a, which acta as an advance stoppage, is provided, only the spring on one side (the left side spring) is compressed when the tilt plate 7 has moved as shown in FIG. 10(b). Therefore, if the lateral load F, to which the cutting tool 6 is to be subject, has diminished, the tilt plate 7 quickly and surely returns to the state shown in FIG. 10(a). Thus, the machining tool 100 achieves high centering performance.

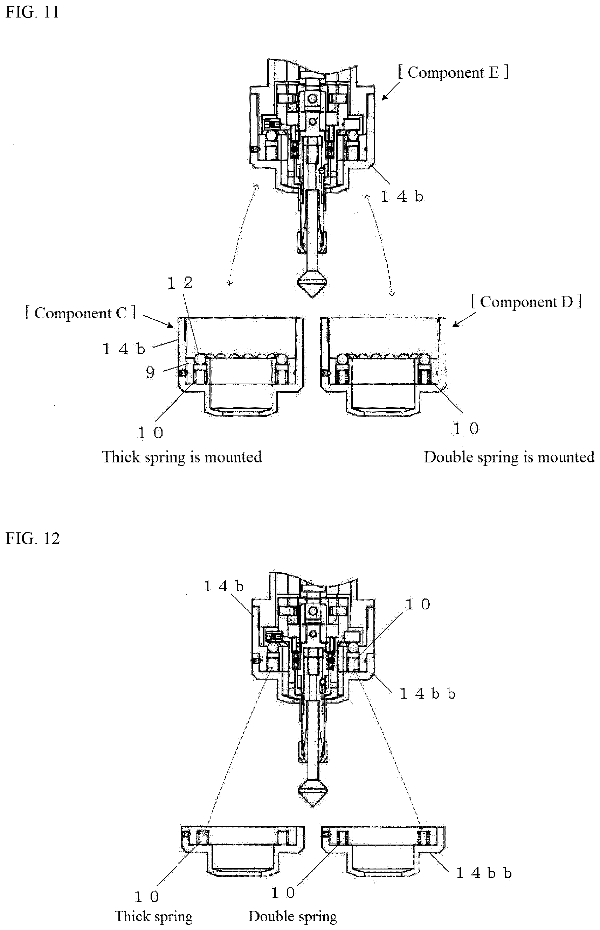

FIG. 11 is a diagram illustrating how the tilt support mechanism 15 is replaced as a set. The diagram shows an example illustrating how a component C including a thick spring, or a component D including a double spring is to be replaced with a component E, which is already mounted on the machining tool 100. Each of the components C, D, and E is to be mounted on the tilt support mechanism 15 as a set. Each of these sets includes the support plate 9, the steel balls 12, the round plates 11, and the springs 10, all of which are covered by the lower cover 14b.

FIG. 12 is a diagram illustrating how the spring only of the tilt support mechanism 15 is replaced. The lower cover 14b of the machining tool 100 includes a base 14ba and a removable cap 14bb, which is a tip part of the lower cover 14b. By removing the cap 14bb, the spring 10 that has been installed can be taken out easily. Replacing the installed spring with, for example, a thick spring or a double spring is easily made by removing the cap 14bb.

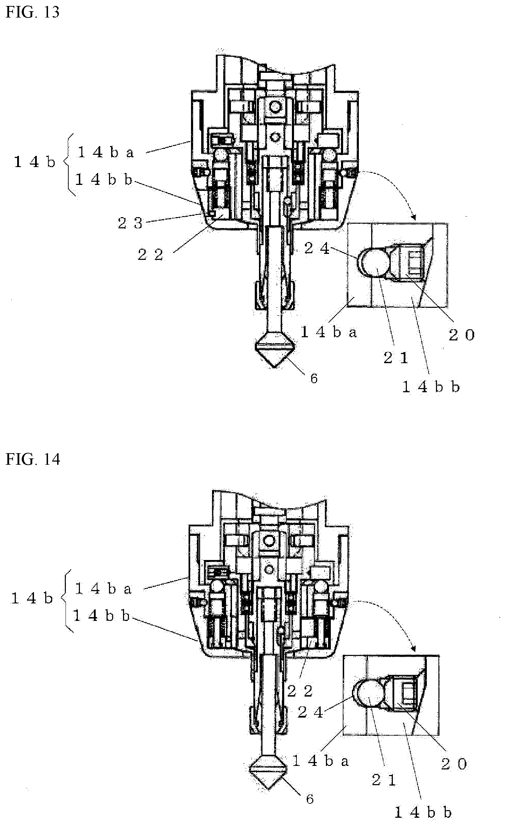

FIGs. 13 and 14 are diagrams each illustrating the means to adjust the initial load of the spring 10. FIG. 13 shows Example 1 and FIG. 14 shows Example 2.

Referring to FIG. 13, the cap 14bb includes steel balls 21 on its inside part. The cap 14bb is provided with threaded holes at several locations on its periphery. The steel ball 21 is inserted into each of the threaded holes to be engaged with a ball groove 24 of the base 14ba, which enables the cap 14bb to rotate the outside of the base 14ba. Each of the threaded holes is provided with a set screw 20, which prevents the steel ball 21 from coming off. By providing several recesses to the base 14ba as the ball grooves 24 to accommodate each of the steel balls 21, each of the steel balls 21 can be pushed into each of the recesses by the set screws 20, which fix the cap 14bb to the base 14ba. An adjustment dish 22 is provided to the bottom of each hole 13. The adjustment dish 22 is screw-connected to the base 14ba. A pin 23 is provided such that one end of the pin 23 is fixed to the adjustment dish 22, and the other end of the pin 23 protrudes from a long vertical hole of the cap 14bb to the outside of the cap 14bb. Turning the cap 14bb rotates the adjustment dish 22 via the pin 23, which causes the adjustment dish 22 to move up and down to change the length of the spring 10. As a result, the initial load of the spring 10 can be adjusted. The load can be checked externally by the position where the pin 23 is in the long hole. After adjusting the initial load, tightening the set screw 20 can fix the cap 14bb to the base 14ba. Example 1 in FIG. 13 is provided with a double spring. If only the first outer spring reacts to the applied load, the load can be adjusted within a given range. If a load is applied that is greater than the load to which the first outer spring can react, both the first outer spring and the second inner spring react together.

Referring to FIG. 14, the cap 14bb includes steel balls 21 on its inside part. The cap 14bb is provided with threaded holes at several locations on its periphery. The base 14ba is provided with ball grooves 24 around the periphery thereof. The steel ball 21 is inserted into each of the threaded holes to be engaged with a ball groove 24 of the base 14ba, which enables the cap 14bb to rotate the outside of the base 14ba. Each of the threaded holes is provided with a set screw 20, which prevents the steel ball 21 from coming off. Several recesses are provided to the base 14ba as the ball grooves 24 to accommodate each of the steel balls 21. The set screw 20 pushes each steel ball 21 into each of the recesses and fixes the cap 14bb to the base 14ba. A projection of the base 14ba is fitted into a cutout part of the adjustment dish 22, so that the adjustment dish 22 moves only axially with respect to the base 14ba. The adjustment dish 22 is screw-connected to the cap 14bb. By rotating the cap 14bb, the adjustment dish 22 moves in the vertical direction, by which the spring length can be changed to adjust the initial load. After adjusting the initial load, tightening the set screw 20 can fix the cap 14bb to the base 14ba. Example 2 in FIG. 14 is provided with a double spring. The initial load of the first spring is adjusted while the second spring is compressed with a spring bearing and a retaining ring. If a load to which the first outer spring is subject is within a given range of the initial load, only the first outer spring reacts. If the first outer spring is subject to a load that is greater than the load to which the first spring can react, both the first outer spring and the second inner spring react together.

### Industrial Applicability

The present invention has significantly improved wear of the tilt support mechanism, which provides a machining tool with a long life. The tilt support mechanism that includes steel balls provides smooth and precise operations to the machining tool, and also achieves resistance to high loads applied to the machining tool. These features make the present invention suitable for deburring.

### Description of Reference Signs

- 1.: upper part shaft
- 3.: tilt device
- 3a.: fixed yoke
- 3b.: tilt yoke
- 3c.: center block
- 3dx.: pin
- 3dy.: pin
- 4.: main drive shaft
- 5.: holder
- 6.: cutting tool
- 7.: tilt plate
- 8.: air path
- 9.: support plate of tilt support mechanism
- 10.: spring of tilt support mechanism
- 11.: round plate of tilt support mechanism
- 12.: steel ball of tilt support mechanism
- 13.: hole
- 13a.: step
- 14.: cover
- 14a.: upper cover
- 14b.: lower cover
- 14ba.: base
- 14bb.: cap
- 15.: tilt support mechanism
- 16.: central axis
- 17.: tilt axis
- 20.: set screw of cap
- 21.: steel ball for fixing cap
- 21'.: set screw of tilt device
- 22.: adjustment dish
- 23.: pin
- 24.: ball groove
- 30.: conventional pin-type tilt support mechanism
- 31.: conventional pin case
- 32.: conventional pin
- 41.: conventional pressure receiving plate
- 43.: conventional spherical plain bearing
- 100.: machining tool

## Claims

1. A machining tool comprising: an upper shaft (1) to be attached to a host device, through which torque is transmitted;
a tilt device (3) connected to a tip side of the upper shaft (1), the tilt device comprising a fixed yoke (3a), a tilt yoke (3b), a pin (3dx) around which the tilt yoke (3b) revolves in one direction, and a pin (3dy) around which the tilt yoke (3b) revolves in a direction orthogonal to said one direction;
a main drive shaft (4) comprising a tilt plate (7) at an upper end thereof, the tilt plate (7) being connected to the tilt yoke (3b);
a holder (5) to be inserted into a tip side of the main drive shaft (4), a cutting tool (6) being attached to the holder (5); and
a tilt support mechanism (15) contacting an underside of the tilt plate (7) to support with a steel ball (12) the tilt plate (7) being inclined.

2. The machining tool according to Claim 1, wherein the tilt device (3) comprises a set screw (21'), and wherein if the set screw (21') is put in an operating state (on-state), the tilt yoke (3b) is restricted to revolving in one direction, and if the set screw (21') is put in a non-operating state (off-state), the tilt yoke (3b) can be tilted in all circumferential directions.

3. The machining tool according to Claim 1, wherein the tilt support mechanism (15) is housed inside a lower cover (14b), the tilt support mechanism (15) comprising a support plate (9), a plurality of holes (13) provided to the support plate (9), the steel balls (12), round plates (11), springs (10), and steps (13a), wherein the steel ball (12), the round plate (11), and the spring (10) are inserted into each of the holes (13), each of the steps (13a) being provided to each of the holes (13), wherein an initial load is put on the spring (10), and wherein the round plate (11) does not rise above the step (13a).

4. The machining tool according to Claim 3, wherein the tilt support mechanism (15) is replaced as a set, the set including the support plate (9), the steel balls (12), the round plates (11), the springs (10), and the lower cover (14b).

5. The machining tool according to Claim 3, wherein the lower cover (14b) comprises a base (14ba) and a cap (14bb), and wherein removing the cap (14bb) allows the spring (10) only to be replaced.

6. The machining tool according to Claim 5, wherein the tilt support mechanism (15) comprises an adjustment dish (22) that contacts an underside of each of the springs (10), and a pin (23) that is fixed to the adjustment dish (22) at one end thereof, the other end thereof protruding from a long vertical hole of the cap (14bb) to an outside of the cap (14bb), the adjustment dish (22) being screw-connected to the base (14ba), and
wherein rotating the cap (14bb) on ball grooves (24) enables the adjustment dish (22) to be rotated via the pin (23), causing the adjustment dish (22) to move up and down to change the length of the spring (10), by which an initial load of the spring (10) is adjusted.

7. The machining tool according to Claim 5, wherein the tilt support mechanism (15) comprises an adjustment dish (22) that contacts an underside of each of the springs (10), the adjustment dish (22) being screw-connected to the cap (14bb), and
wherein, rotating the cap (14bb) on ball grooves (24) enables the adjustment dish (22) to be rotated, causing the adjustment dish (22) to move up and down, by which an initial load of the spring (10) is adjusted.

8. The machining tool according to Claim 1, wherein the upper shaft (1) comprises an air path (8), and wherein air fed into the air path (8) passes through the tilt device (3) provided inside an upper cover (14a) to be released outside through a gap between a lower cover (14b) and the main drive shaft (4).
